# EUROPÄISCHE PATENTSCHRIFT

(11) **EP 1 167 463 B1**
(45) Veröffentlichungstag und Bekanntmachung des Hinweises auf die Patenterteilung: **27.04.2005**
(21) Anmeldenummer: 01114488.8
(22) Anmeldetag: 15.06.2001
(51) Int. Cl.: C09D 5/18, C09D 175/14, C08K 5/3492

(54) **Flammwidrige Harzbeschichtung**
Flame retardant resin coating
Revêtement en résine ignifugeante

(30) Priorität: 23.06.2000 DE 10030658
(43) Veröffentlichungstag der Anmeldung: 02.01.2002
(73) Patentinhaber: Trespa International B.V., 6002 SM Weert (NL)
(72) Erfinder: Huusken, Robert, 7587 NN De Lutte (NL)
(74) Vertreter: Dohmen, Johannes Maria Gerardus

(56) Entgegenhaltungen:
- EP-A- 0 440 580
- US-A- 3 914 513
- US-A- 3 915 777

## Beschreibung

Die Erfindung betrifft eine flammwidrige Harzbeschichtung aus einem flammhemmenden Grundharz und einer Topschicht aus einem Klarharz sowie die Verwendung dieser Harzbeschichtung.

Die Verwendung von Melaminphosphat sowie von kondensierten Melaminphosphaten wie etwa Dimelaminpyrophosphate zur Flammhemmung von Kunststoffen ist im Stand der Technik bekannt. In der US-A 4,010,137 ist die Verwendung solcher Flammhemmer bei Polyolefinen und in der US-A 3, 915, 777 ist die Verwendung für Beschichtungen beschrieben.

Aus "Chemical Abstracts, Vol. 89 : 111478 " ist des Weiteren bekannt, dass Melaminphosphat, das durch Wasserabspaltung in Dimelaminpyrophosphat überführt wird, als Flammhemmer in Polyamid eingesetzt wird, das mit einem Kalziumsilikat gefüllt ist. Es hat sich dabei gezeigt, dass bei Verwendung von Melaminphosphat, sowie von kondensierten Melaminphosphaten, wie Dimelaminpyrophosphat in nicht faserverstärkten Polyamiden die Resultate in bezug auf die Flammwidrigkeit unbefriedigend sind, da die gewünschten Brandklassen nicht erreicht werden.

Aus der WO 96/09344 ist beispielsweise eine flammfeste, glasfaserverstärkte Polyamidharzmasse bekannt, die 10 bis 40 Gew.-% Melaminphosphat, Melaminpyrophosphat, insbesondere Dimelaminpyrophosphat, oder Melaminpolyphosphat sowie Gemische davon enthält. Weitere bevorzugte halogenfreie Flammhemmer, diein der Polyamidharzmasse enthalten sein können, sind Zinkborat, Zinkphosphat, Melaminsulfat oder Ammoniumpolyphosphat. Außerdem können übliche Additive, wie Gleitmittel, Dispergiermittel und Haftvermittler zugesetzt werden, wie etwa Stearate, Phosphonate, Fettsäureamide oder Aerosile.

Derartige glasfaserverstärkte Polyamidharzmassen eigenen sich insbesondere zur Herstellung von Formkörpern, die in der Elektro- oder Elektronikindustrie eingesetzt werden.

In der WO 99/45061 sind Verbundwerkstoffe beschrieben, die aus einem Faser- und/oder Gewebematerial bestehen, das mit einer Harzmatrix getränkt und gehärtet ist. Die Harzmatrix auf der Basis eines Epoxid/Anhydridreaktionsharzes ist mit reaktiv eingebauten Phosphorverbindungen auf der Basis von Säurederivaten flammwidrig ausgerüstet. Der flammwidrige Verbundwerkstoff umfaßt des Weiteren Füllstoffe, Entschäumer, Verlaufhilfsmittel, Haftvermittler und in der Epoxidharzchemie gebräuchlichen Reaktionsbeschleuniger, wie z.B. tertiäres Amin und/oder Imidazol oder Organometall-Komplexe. Der auf die Harzmatrix bezogene Phosphorgehalt beträgt 0,5 bis 5 Gew.-%. Solche Verbundwerkstoffe werden als Leichtwerkstoffe im Fahrzeugbau beispielsweise für Schienenfahrzeuge, Aufbauten von Kraftfahrzeugen und Schiffs- und Flugzeugkomponenten eingesetzt.

Für die Abdeckung und Umhüllung elektronischer Bauelemente sind aus der WO 94/10223 lagerstabile und gut aushärtbare einkomponentige Reaktionsharzsysteme bekannt, die aus einer Mischung aus handelsüblichen Epoxidharzen und phosphorhaltigen Glycidylestern, insbesondere Phosphonsäurediglycidylester sowie aus kationischen Photoinitiatoren bestehen. Diese Reaktionsharzsysteme sind rein thermisch nicht härtbar und können bei hohen Temperaturen bis 150 °C aufbereitet werden. Auch nach der Aktivierung des Reaktionsharzsystems mit UV-Strahlung bleibt dieses bei Raumtemperatur über mehrere Monate flüssig, was ein problemloses Arbeiten ermöglicht. Das aktivierte Reaktionsharzsystem ist bei dem Temperaturen von 100 bis 150 °C thermisch aushärtbar. Die reaktive Phosphorkomponente wird beim Aushärten in den Reaktionsharzformstoff eingebaut und zeigt auch bei Temperaturbelastung des Reaktionsharzformstoffes keine Migration. Die durch den Phosphorzusatz bedingten flammwidrigen Eigenschaften des Reaktionsharzformstoffes bleiben daher erhalten. Die in dem Reaktionsharzsystem enthaltenen Phosphorverbindungen führen dazu, dass sich das System ohne Photoinitiator nicht, mit Photoinitiator dagegen schnell und vollständig aushärten läßt, ohne das ein zusätzlicher Beschleuniger erforderlich ist.

Aus der WO 96/07678 ist ein UV-härtbares einkomponentiges Reaktionsharz bekannt, das aus einem phosphorhaltigen Acrylat, einer weiteren, radikalisch mitAcrylaten copolymerisierbaren, ungesättigten Verbindung und einem radikalischen Fotoinitiatorsystem besteht. Die phosphorhaltigen Acrylate sind mit den verschiedensten handelsüblichen Acrylatkomponenten zu lagerstabilen Reaktionsharzen vermischbar, die sich zur Abdeckung elektronischer Bauelemente eignen und durch UV-Bestrahlung vollständig zu flammwidrigen Abdeckmassen aushärten. Das phosphorhaltige Acrylat wird als Produkt von verschiedenen Umsetzungen erhalten. So kann beispielsweise eine Hydroxyalkylphosphorverbindung mit einem Isocyanatoalkyl(meth)acrylat oder mit einem Methacrylsäureisocyanat umgesetzt werden. Ebenso ist es möglich, Dihydroxyalkylphosphorverbindung mit einem aktiven (Meth)acrylsäurederivat oder eine epoxidhaltige Phosphorverbindung mit einem Hydroxyalkyl(meth)acrylat umzusetzen.

Aufgabe der vorliegenden Erfindung ist es, eine flammwidrige Harzbeschichtung anzugeben, die zum Aufbringen auf Gegenstände geeignet ist, die der Bewitterung im Freien oder feuchten, thermischen und/oder chemischen Bedingungen ausgesetzt sind, wobei die gefärbte Harzbeschichtung weitgehend frei von Farbveränderungen bleiben soll.

Zur Lösung dieser Aufgabe enthält das Grundharz Farbpigmente und 2,5 bis 50 Gew.-%, bezogen auf das Gewicht des Grundharzes, flammhemmende Additive aus der Gruppe Melaminpolyphosphate, Melaminpyrophosphate, Ammoniumpolyphosphate oder Mischungen hiervon und sind im Klarharz 0,5 bis 2 Gew.-%, bezogen auf das Gewicht des Klarharzes, von zumindest einem sterisch behinderten Amin, bei dem der Stickstoff in einem cycloaliphatischen Piperidylring eingebaut ist, vorhanden.

Das Grundharz wird aus der Gruppe der Polyester-, Polyether-, Epoxid-, Polyurethan-, Acrylic-Acrylate, Melaminacrylate, Silikon(meth)acrylate ausgewählt. In Weiterbildung der Erfindung besteht das Grundharz aus phosphorenthaltenden Polyurethanen, die durch Copolymerisation eines Polymervorläufers mit Monomeren erhalten werden, wobei der polymerisierbare, Phosphor enthaltende Polymervorläufer
a) eine polymerisierbare ungesättigte Bindung;
b) eine Oxycarbonyl- oder Iminocarbonyl-Gruppe;
c) eine freie Hydroxy- oder eine funktionelle Gruppe, erhältlich durch die Reaktion einer freien Hydroxy-Gruppe mit einem geeigneten Elektrophil; und
d) eine endständige, Phosphor und Sauerstoff enthaltende Gruppe am Ende einer Kohlenstoffkette und zumindest eine Gruppe aufweist, ausgewählt aus einer Phosphor-Hydroxy-und gegebenenfalls einer substituierten Hydrocarbyl-Gruppe, die über eine Oxy-Gruppe mit einem Phosphoratom verbunden ist, und
im wesentlichen frei von Halogene enthaltenden Gruppen ist und ein Molekulargewicht (Massenzahl Mn für ein Polymer) von 200 bis 5000 Daltons und gegebenenfalls eine Viskosität von kleiner 14 000 mPa · s hat.

Des Weiteren besteht das Grundharz aus phosphorenthaltenden Polyurethanen, die durch Copolymerisation einer organischen Verbindung oder eines Polymers mit Monomeren erhalten werden, wobei die organische Verbindung oder das Polymer zumindest eine gegebenenfalls substituierte Cycloalkoxy-Gruppe enthält, in der zumindest eines der Ringatome Sauerstoff ist, wobei die Cycloalkoxy-Gruppe mit zumindest einer gegebenenfalls α-substituierten Alkylenylcarbonyloxy-Gruppe verbunden ist, die zumindest ein aktives Wasserstoffatom α-ständig zur Carbonyl-Gruppe aufweist, wobei
a) (zumindest) eine (der) Cycloalkoxy-Gruppe(n) miteinem Phosphatesterreagieren kann, um eine endständige Phosphatester-Gruppe zu bilden, die eine Hydroxy-Gruppe an dem β-Kohlenstoffatom besitzt; und/oder
b) zumindest eine Alkylencarbonyl-Gruppe mit einem H-Phosphonatester reagieren kann, unter Ausbildung einer endständigen Phosphonatester-Gruppe β-ständig zu einer Carbonyloxy-Gruppe und gegebenenfalls (zumindest) eine (der) Cycloalkoxy-Gruppe(n) mit einer Carbonsäure-Gruppe reagierten kann, die mit einer ungesättigten Gruppe konjugiert ist unter Ausbildung einer Carbonyloxyhydroxyalkyl-Gruppe, die zu einer ungesättigten Kohenstoffbindung benachbart ist und in einem oder in beiden Fällen das resultierende Produkt zumindest ein Phosphoratom, zumindest eine Hydroxyl-Gruppe und zumindest eine polymerisierbare, ungesättigte Kohlenstoffbindung enthält.

Ferner sind im Klarharz 0,5 bis 5 Gew.-%, bezogen auf das Gewicht des Klarharzes, zumindest eines UV-Absorbers vorhanden.

Derartige Harzbeschichtungen zeigen überlegene, weitgehend konstante Farbeigenschaften und bieten bereits bei geringen Anteilen von Phosphorverbindungen hohe Flammwidrigkeit und auch nach unterschiedlichen Bewitterungstests eine rissfreie Oberfläche der Beschichtung.

Ein bevorzugter Flammhemmer ist Melaminpolyphosphat gemäß der Formel (C₃H₈N₆)ₙ · (HPO₃)ₘ, mit m, n gleich natürlichen Zahlen. Das Molarverhältnis Phosphor zu Melamin beträgt beispielsweise 1 : 0,5 bis 1 : 3 und bevorzugt 1 : 1 bis 1 : 1,5. Ein weiterer geeigneter Flammhemmer ist Ammoniumpolyphosphat, dessenPartikel in einem Harzmikrogekapselt sind, dessen Wasserlöslichkeit 0,06 bis 0,19 g/100 g Wasser bei einer Temperatur von 20 °C ist. Ein weiterer bevorzugter Flammhemmer ist Dimelaminpyrophosphat gemäß der Strukturformel

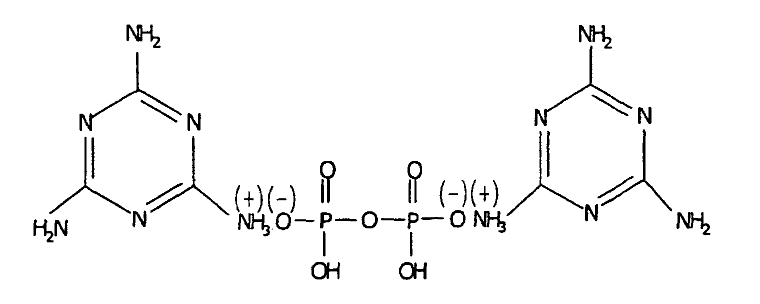

Die flammhemmenden Additive weisen bevorzugt einen Phosphorgehalt von 2,5 bis 50 Gew.-%, insbesondere von 12 bis 15 Gew.-%, bezogen auf das Gewicht des jeweiligen Additivs, auf.

In Ausgestaltung der Erfindung ist die Basis der UV-Absorber Triazin, Benzyliden-Malonat Hydroxyphenylbenzotriazole, 2-Hydroxybenzophenone oder Oxalanilid. Dabei ist der UV-Absorber auf Hydroxyphenyl-s-Triazinbasis mit einem Anteil von 0,5 bis 5 Gew.-%, insbesondere 1 bis 4 Gew.-%, bezogen auf das Gewicht des Klarharzes, in dem Klarharz enthalten. Derartige UV-Absorber haben beispielsweise die folgende Strukturformel:

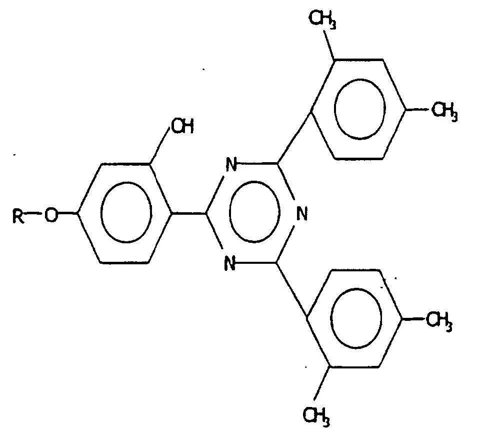

Das als Polyurethan(meth)acrylat verwendete Grundharz einer neuentwickelten Gruppe von Harzen der Firma UCB n.v., B-1620 Drogenbos ist durch Umsetzung des Polyurethans mit einer Verbindung, diemindestens eine phosphorhaltige Gruppe, mindestens eine (Meth)acrylat-Gruppe und mindestens eine funktionelle Gruppe enthält, die mit mindestens einer der Endgruppen des Polyurethans unter Ausbildung einer kovalenten Bindung reagiert, herstellbar. Dabei ist vorteilhafterweise die phosphorhaltige Gruppe eine Phosphat- oder Phosphonat-Gruppe und die (Meth)acrylat-Gruppe Bestandteil einer (Meth)acryloyloxygruppe. Die funktionell Gruppe, die mit einer Endgruppe des Polyurethans unter Ausbildung einer kovalenten Bindung reagiert, ist eine Hydroxygruppe, bevorzugt eine primäre oder sekundäre Hydroxygruppe. Vorteilhafterweise sind eine bis drei (Meth)acryloyloxygruppen vorhanden.

Durch die Anteile an flammhemmenden Additiven im Grundharz wird die Witterungsbeständigkeit der Harzbeschichtung in der Weise beeinflusst, dass die Anfälligkeit gegenüber UV-Bestrahlung, Hydrolyse und sonstigen Bewitterungsphänomenen ansteigt. Um diesen unerwünschten Anstieg der Anfälligkeit entgegenzuwirken, ist es vor allem wesentlich, den Widerstand gegenüber UV-Strahlung zu stärken, da dadurch die Witterungsbeständigkeit stabilisiert wird. Dies geschieht durch die voran stehend beschriebenen UV-Absorbern in einer Klarschicht, die das Grundharz der Harzbeschichtung abdeckt. Die UV-Strahlung kann unmittelbar chemische Bindungen der Polymere aufspalten, weil die von der Wellenlänge abhängige Photonenenergie in den Bereich chemischer Bindungsenergie fällt. Die dabei entstehenden Radikale ergeben bei Abwesenheit von Sauerstoff eine chemische Vernetzung. In Gegenwart von Sauerstoff tritt Photooxidation ein, die bereits durch sichtbares Licht ausgelöst werden kann. Dadurch wird eine zyklische Kettenreaktion hervorgerufen, die ein Hydroperoxid liefert, das in der Polymerkette liegt und zur Kettenspaltung führen kann. Die in der Kettenreaktion formulierten Radikalen können durch Primärstabilisatoren inaktiviert werden, die beispielsweise aus sterisch behinderten Phenolen und Aminen bestehen. Diese können sehr stabile Radikale bilden, die nicht in der Lage sind, Kettenreaktionen zu starten sondern umgekehrt die aggressiven Peroxyradikale abfangen. Besonders wirksam sind sterisch behinderte Amine, auch HALS (hindered amine light stabilisators) genannt, bei denen der Stickstoff in einem cycloaliphatischen Piperidylring eingebaut ist. Die sterisch behinderten Amine sorgen für eine sterische Abschirmung von Radikalen, die abgefangen werden.

Es empfiehlt sich daher neben UV-Absorbern Lichtstabilisatoren aus sterisch behinderten Aminen in die Klarschicht einzubringen. Derartige Amine haben z.B. die folgende Strukturformel

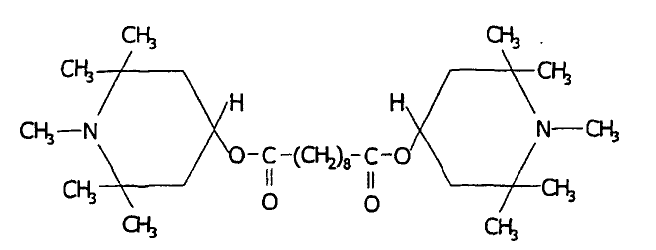

Der Grundlack enthält Farbpigmente, die dem Lack einen bestimmte Färbung geben. Die Färbung wird durch eine Farbmessung nach DIN 5033 in Verbindung mit einer farbmetrischen Bestimmung von Farbabständen von Körperfarben nach der CIELAB-Formel gemäß DIN 6174 ermittelt. Die Farbmesszahlen dienen zur eindeutigen Kennzeichnung einer Farbvalenz. Dazu sind stets drei voneinander unabhängige Zahlenangaben notwendig und hinreichend. Eine Farbvalenz kann deshalb durch einen Punkt in einem dreidimensionalen Raum in dem sogenannten Farbenraum dargestellt werden. Für die Kennzeichnung können unmittelbar die auf ein Primär-System bezogenen Farbwerte verwendet werden, wobei die Maßzahlen einer Körperfarbe auf den vollkommenen mattweißen Körper bezogen sind. Bevorzugt werden die Maßzahlen nach dem Normalvalenzsystem beschrieben, bei dem die Farbvalenz durch die 10° Normfarbwerte X, Y, Z beschrieben wird, die in der Norm DIN 5033 Teil 2 definiert sind. Zu der Farbmessung wurde eine Harzbeschichtung gemäß der Erfindung auf ein Muster aufgetragen und zunächst die Körperfarbe dieses Musters bestimmt. Danach wurde dieses Muster verschiedenen Standard-Bewitterungstests unterzogen und die Farbvalenz des bewitterten Musters bestimmt. Die Differenz aus ursprünglicher Farbvalenz und der Farbvalenz nach der Bewitterung ergibt einen maximalen Farbabstand dE, der im Bereich von 0,5 bis 2,0 festgelegt wurde. Ist der Farbabstand dE > 2,0 so ändert sich die Färbung der Harzbeschichtung durch die Bewitterung in einem Ausmaß, dass eine derartig beschichtete Platte nicht für den Dauereinsatz geeignet ist und daher bei der Qualitätskontrolle ausgeschieden wird. Mit den nachstehenden tabellarisch zusammengestellten Beispielen wurden folgende Bewitterungstests vorgenommen:

### Xenon 1200-Test

Dieser Test erfolgte gemäß der Vorschrift TNO 158/89. Bei diesem Test wird ein Muster, ausgerüstet mit einer Harzbeschichtung, von Xenonlampen über 3000 Stunden dauerbestrahlt. Dies entspricht einem Einsatz von etwa 10 Jahren unter natürlicher Sonnenbestrahlung in westeuropäischen Klimazonen. Die Lichtquellen sind drei Xenonlampen, jede mit einer Leistung von 4500 Watt. Die Lichtintensität beträgt 90 ± 5 W/m², im Wellenlängenbereich von 300-400 nm. Die Umgebungstemperatur beträgt 30 °C, die Schwarztafeltemperatur 45 ± 3 °C, die relative Feuchtigkeit 65 ± 5 %. Das Muster wird zyklisch mit Wasser 3 Minuten lang besprüht, wobei der einzelne Zyklus 20 Minuten dauert, d.h. 17 Minuten nach Zyklusbeginn setzt die Sprühphase von 3 Minuten Dauer ein. Das Wasser ist destilliert. Das Muster läuft auf einer Kreisbahn um, entlang deren Umfang die Xenonlampen jeweils im Abstand von 120 ° voneinander positioniert sind. Nach einem Umlauf des Musters erfolgt jeweils eine Wende um 180 °, so dass die beiden Seiten im Verhältnis 50/50 bestrahlt werden.

### Klimaänderungstest

Hierbei handelt es sich um einen internen Test der Anmelderin, der vor allem die Wasserlöslichkeit der flammhemmenden Additive widerspiegelt. Je größer deren Wasserlöslichkeit ist, desto eher entstehen Risse in der Harzbeschichtung.

Der Test besteht aus 15 Zyklen, wobei der einzelne Zyklus 48 Stunden in einer Klimakammer dauert und in die folgenden 4 Abschnitte unterteilt ist:
12 Stunden bei 20 °C,6 5 % relativer Feuchtigkeit
12 Stunden bei 80 °C, 5 % relativer Feuchtigkeit
12 Stunden bei 80 °C, 90 % relativer Feuchtigkeit und
12 Stunden bei -20 °C, 0 % relativer Feuchtigkeit.

### Q-panel-Test

Dieser Test erfolgt nach der Norm ASTM G53-91 und dauerte 1000 Stunden. Er zeigt die Farbänderung der Harzbeschichtung in Folge einer UV-B-Bestrahlung.

### Schwitzkammer-Test

Dieser Test erfolgt nach der Norm DIN 50018 und dauert 50 Tage. Hierbei wird dem Schwitzwasser SO₂ zugesetzt und die Farbänderung sowie die Rissfestigkeit der Harzbeschichtung untersucht.

### Flammfestigkeits-Test (cone calorimeter test)

Es wurden Tafeln mit den Abmessungen 10 cm x 10 cm x 8 mm hergestellt, die folgenden Schichtaufbau hatten: flammhemmend modifiziertes Kraftpapier, nichtflammhemmend modifiziertes Standard-Substrat der Firma Westvaco und Harzbeschichtung mit Flammhemmer im Grundharz und Dekorschicht (Klarschicht), die nicht flammhemmend modifiziert war. Das Schichtgewicht lag zwischen 90 und 160 g /m².

Der Test erfolgte gemäß der Norm ISO 5660 mit einer Leistung von 50 kW und über eine Dauer von 720 s. Wichtige Untersuchungskriterien sind die Gesamtwärmefreisetzung, die Geschwindigkeit der Wärmefreisetzung und die Zündzeiten für die Dekor- und die Kernschicht. Es wurde freigesetzte Wärmemengen über der Bestrahlungszeit aufgetragen, wie die abgebildeten Kurven der Figuren 1 und 2 zeigen. Aus diesen Kurven ist zu erkennen, dass nach etwa zwei bis zweieinhalb Minuten der Klar- und Grundlack der Harzbeschichtung verbrannt sind und in dieser Zeitspanne vor allem zur Wärmefreisetzung beitragen. Dieser Anteil zu der gesamten freigesetzten Wärmemenge ist signifikant. Es tragen etwa 140 g/m² Harzbeschichtung bei diesem Test 10 % zu der gesamten freigesetzten Wärmemenge dieser Tafeln bei. Der Mengenanteil dieser Beschichtung beträgt dabei nur etwa 1,5 % des gesamten Tafeltestgewichts.

Nachdem die Harzbeschichtung verbrannt ist, dauert es etwa 3 bis 4 Minuten bis zum Zünden des Substrats. Es besteht eine starke Beziehung zwischen der Zündung der Harzbeschichtung und der Zündung des Substrats. Bis zu einem Phosphorgehalt von 1,4 Gew. -% der Harzbeschichtung kommt es zu einer Zündung der Harzbeschichtung. Diese wärmt das darunter befindliche Substrat auf, was zu einer früheren Zündung des Substrats führt und zu einer höheren gesamten Wärmemengefreisetzung. Enthält die Harzbeschichtung mehr als 1,4 Gew.-% Phosphor, so unterbleibt eine Zündung der Harzbeschichtung. Eine Harzbeschichtung mit 10 bzw. 15 Gew.-% Melaminpolyphosphat enthältbeispielsweise 1,5 bis 2,3 Gew.-% Phosphor. Dies führt dazu, dass die Entzündung des Substrats wesentlich später erfolgt, wodurch eine wesentlich niedrigere Wärmemenge freigesetzt wird. Wird der Phosphoranteil in der Harzbeschichtung beispielsweise auf 4 Gew.-% erhöht, so bleibt dies weitgehend ohne größeren Einfluß auf die Zündzeit für das Substrat. Mit anderen Worten bedeutet dies, dass der zusätzliche Phosphoranteil in der Harzbeschichtung nicht noch eine zusätzliche Flammhemmung mit sich bringt.

Bei der Auswahl der flammhemmenden Additive scheiden nicht-reaktive Additive, die halogenierte Verbindungen sind, wegen ihrer unzureichenden UV-Stabilität aus. Durch Elektronenstrahlung härtbareAdditivesind im allgemeinen sehr teuer und besonders empfindlich gegenüber starken Temperatur- und Feuchtigkeitsschwankungen, woraus unerwünschte Rissbildungen in der Harzbeschichtung resultieren. Gut geeignete flammhemmende Additive, die bei den Bewitterungstests der harzbeschichteten Substrate in deren Harzbeschichtung diese Additive enthalten waren, gute Ergebnisse lieferten, sind die kommerziell erhältlichen Ammoniumpolyphosphate der Chemischen Fabrik Budenheim, Budenheim, Deutschland, die unter den Warennamen FR Cros 484 EC, FR Cros 486 und FR Cros 488 vertrieben werden. Diese Ammoniumpolyphosphate sind mit in einem Silan- oder Epoxyharz mikrogekapselt und haben eine Wasserlöslichkeit von 0,06 bis 0,19 g/100 g Wasser bei einer Temperatur von 20 °C.

Gleichfalls sehr gute Ergebnisse lieferten die kommerziell erhältlichen flammhemmenden Additive Dimelaminpyrophosphat (Warenname Budit 311), Dimelaminorthophosphat (Warenname Budit 310) und Monomelaminorthophosphat (Warenname Budit 312) der Firma Budenheim sowie Melaminpolyphosphat (Warenname Melapur® 200) der niederländischen Firma DSM, Geleen, Niederlande.

In allen Beispielen der nachfolgenden Tabelle 1 war der Klarlack der Harzbeschichtung ein aliphatisches Urethanacrylat. Für den Grundlack bzw. die Grundbeschichtung wurde ein aliphatisches Urethanacrylat mit Farbpigmenten, flammhemmenden Additiven unterschiedlicher Konzentrationen und üblichen Zusätzen für die Grundbeschichtung verwendet.

Die Grundlacke wurden mit zwei unterschiedlichen Farbpigmenten gefärbt, die folgende Code-Bezeichnungen haben: reines Weiß A05.0.0 und Braun A08.8.1.

Aus Tabelle 1 ist ersichtlich, dass die Harzbeschichtungen die Bewitterungstests zur vollen Zufriedenheit bestanden haben, ohne dass An- oder Bruchrisse aufgetreten sind. In Tabelle 2 sind Vergleichsbeispiele zusammengefasst, die flammhemmende nicht-reaktive Additive wie beispielsweise Chlor enthaltendes Polyphosphonat (Sandoflam 5087), tris-(2-chloroisopropyl)phosphat (Fyrol PCF), tri-(2-chloroethyl)phosphat (Fyrol CEF), FR Cros 484 EC im Grundharz enthalten. Es zeigt sich bei diesen Additiven durchgehend, dass An- und Bruchrisse in der Harzbeschichtung bei den Bewitterungstests auftreten.

Auch die mittels Elektronenstrahlung härtbaren flammhemmenden Additive wie Polysurf HPACE 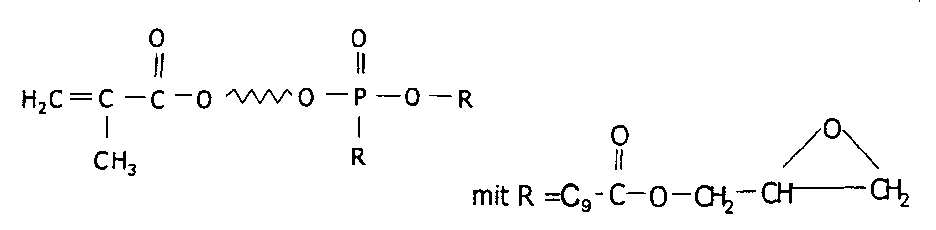
Polysurf HP
mit HP : R = H und
Polysurf HPH
mit HPH : R = C₁₂ - C₁₄ sowie
tris(acryloyloxyethyl)phosphot (V-3PA) 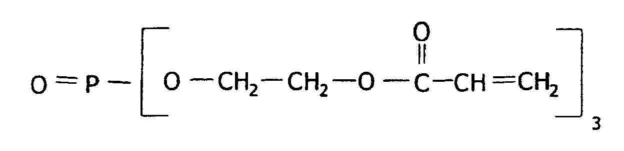
zeigen eine nicht tolerierbare Anzahl von An- und Bruchrissen nach den Bewitterungstests.

Die abgebildeten Kurven der Figuren 1 und 2 zeigen die während des Flammfestigkeitstests freigesetzten Wärmemengen in Abhängigkeit von der Bestrahlungszeit. In den Figuren 1 und 2 ist j eweils als Referenzkurve 1 bzw. 4 eine Harzbeschichtung ohne Flammhemmer aufgetragen. Es zeigt sich dabei, dass die Harzbeschichtung aus Grund- und Klarharz schon nach kurzer Bestrahlungszeit verbrennt und etwa 10 % der gesamten Wärmemenge freigesetzt werden. In Figur 1 ist als Flammhemmer im Grundharz Melaminpolyphosphat (Melapur® 200) einmal mit einem Anteil von 15 Gew.-%, siehe Kurve 2, und einmal mit einem Anteil von 10 Gew.-%, siehe Kurve 3, vorhanden. Diese Prozente beziehen sich auf das Gewicht des Grundharzes. Es zeigt sich, dass der höhere Phosphoranteil der Kurve 2 gegenüber der Kurve 3 die freigesetzte Wärmemenge erniedrigt und somit die Verkohlung des Substrats der Musterplatte langsamer abläuft.

Ähnliche Ergebnisse werden mit dem Flammhemmer Dimelaminpyrophosphat (Budit 311) im Grundharz erhalten, wie aus den Kurven 4 bis 6 der Figur2 ersichtlich ist. Die Kurve 5 zeigt den Verlauf der freigesetzten Wärmemenge für einen Anteil von 15 Gew. -% Dimelaminpyrophosphat im Grundharz und die Kurve 6 zeigt diesen Verlauf für einen Anteil von 10 Gew.-% Dimelaminpyrophosphat im Grundharz. Auch hier gilt, dass der höhere Phosphoranteil der Kurve 5 gegenüber der Kurve 6 die freigesetzte Wärmemenge erniedrigt und somit die Verkohlung des Substrats der Musterplatte langsamer abläuft.

Die bisher beschriebenen flammhemmenden Additive, basierend auf Salzen der Phosphorsäure mit Ammoniak und Melamin, sind bevorzugt. Vergleichbar wirksame flammhemmende Additive liefern Salze der phosphorigen Säure P(OH)₃ (Phosphite), einer Phosphonsäure O=P(OH)₂R (Phosphonate), einer phosphonigen Säure P(OH)₂R (Phosphonite), einer Phosphinsäure O=P(OH)R₂ (Phosphinate), einer phosphinigen SäureP(OH)R₂ (Phosphinite) mit Ammoniak und Melamin. Ebenso sind Poly- und Pyro-Salze der drei erst genanten Säuren, das sind die phosphorige Säure, eine Phosphonsäure und eine phosphonigen Säure mit Ammoniak und Melamin als flammhemmende Additive geeignet.

Neben Melamin und Ammoniak sind auch andere stickstoffhaltige Verbindungen geeignet, die aufDerivaten und Melaminvorläufern basieren. Dazu gehören unter anderem Melaminpolymere, teilweise hydrolisiertes Melamin, Harnstoffund seine Derivate, (Di)cyanamide, Guanamide wie Aceto-, Benzoguanamid usw.. Diese Verbindungen ergeben zusammen mit einer oder mehreren der zuvor erwähnten Säuren entsprechende Salze, die eine ionische Struktur haben. Ebenso sind kovalente Strukturen möglich. Sowohl diese Verbindungen als auch die Salze können allein in einer Formulierung oder in allen denkbaren Mischungen miteinander angewandt werden.

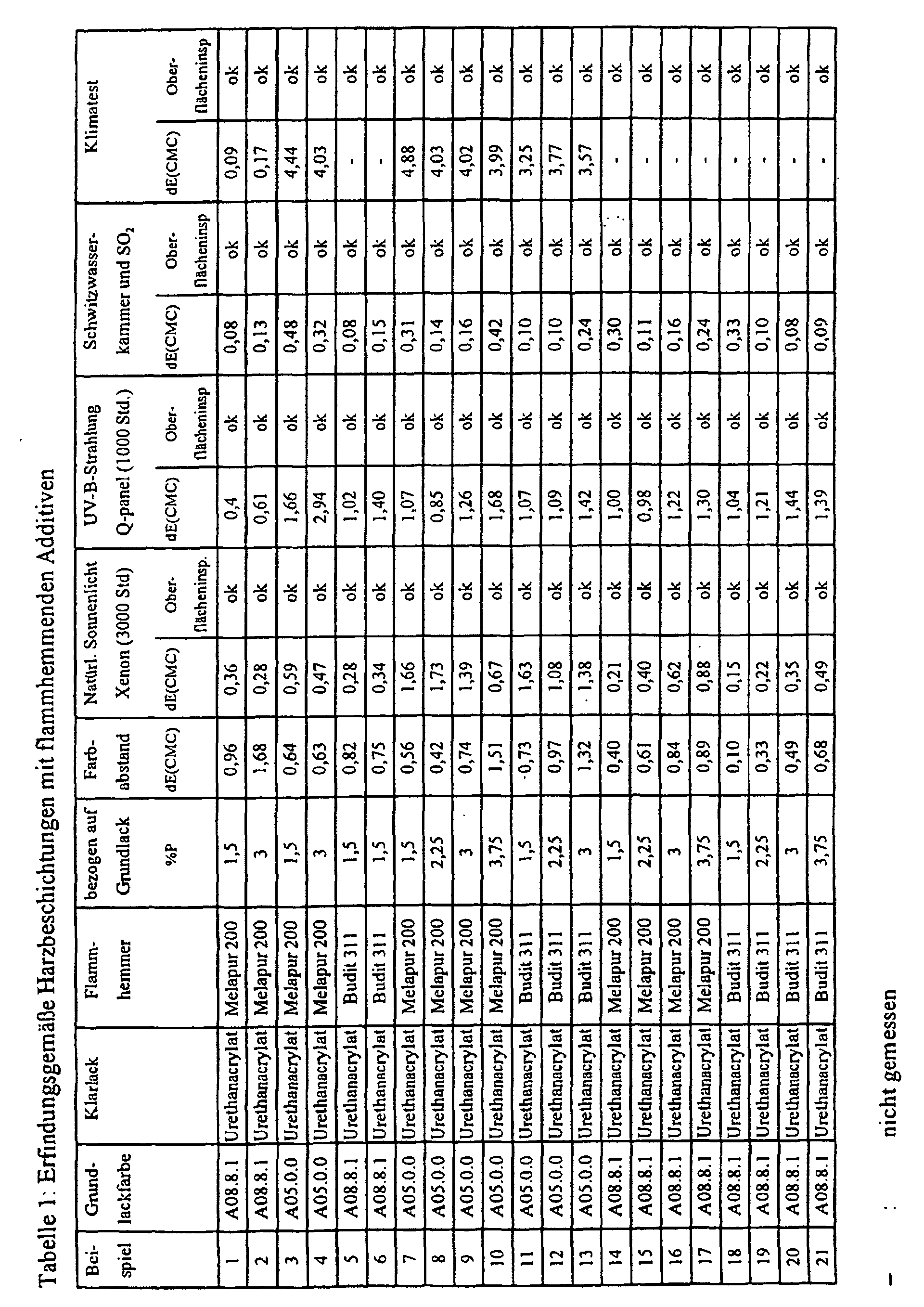

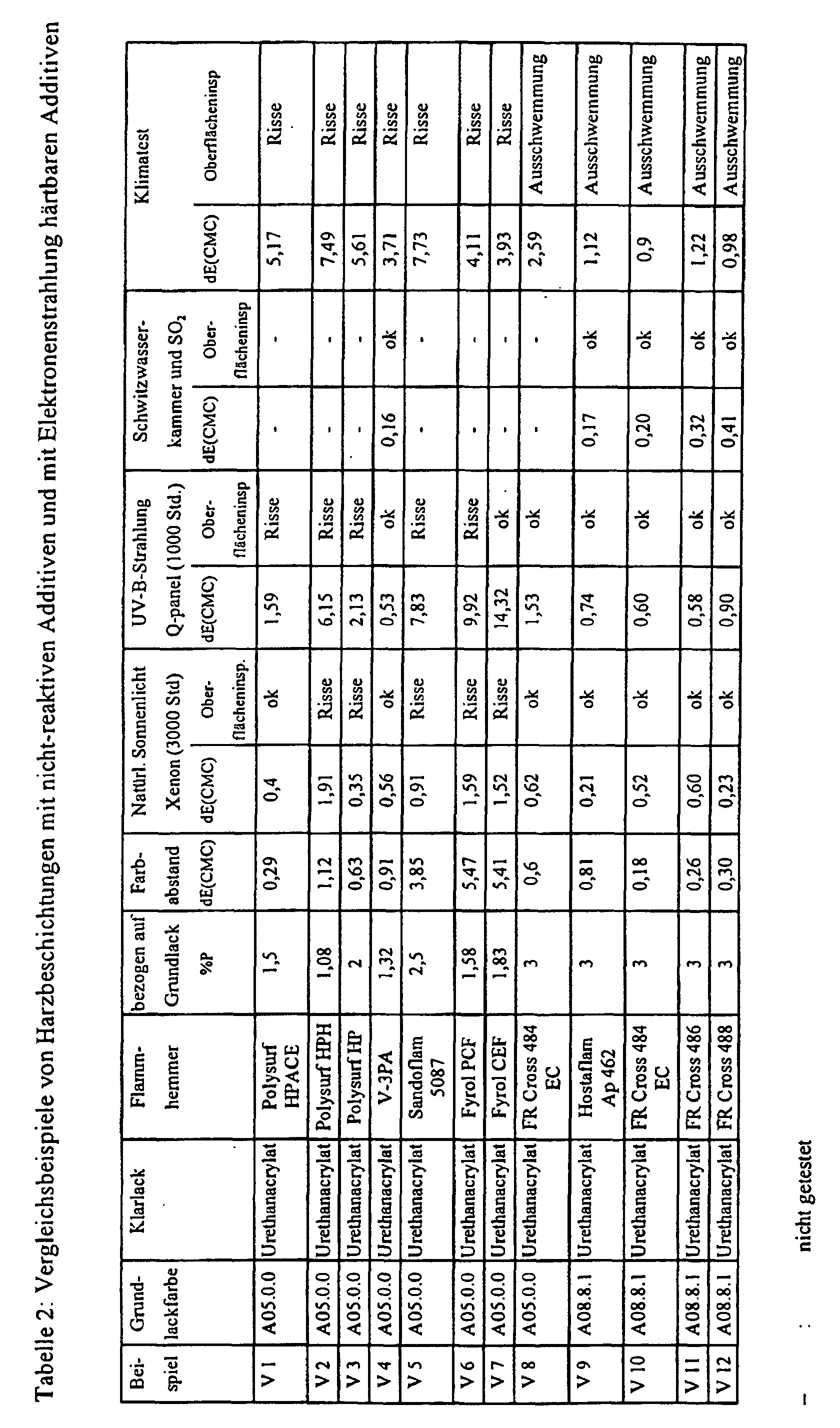

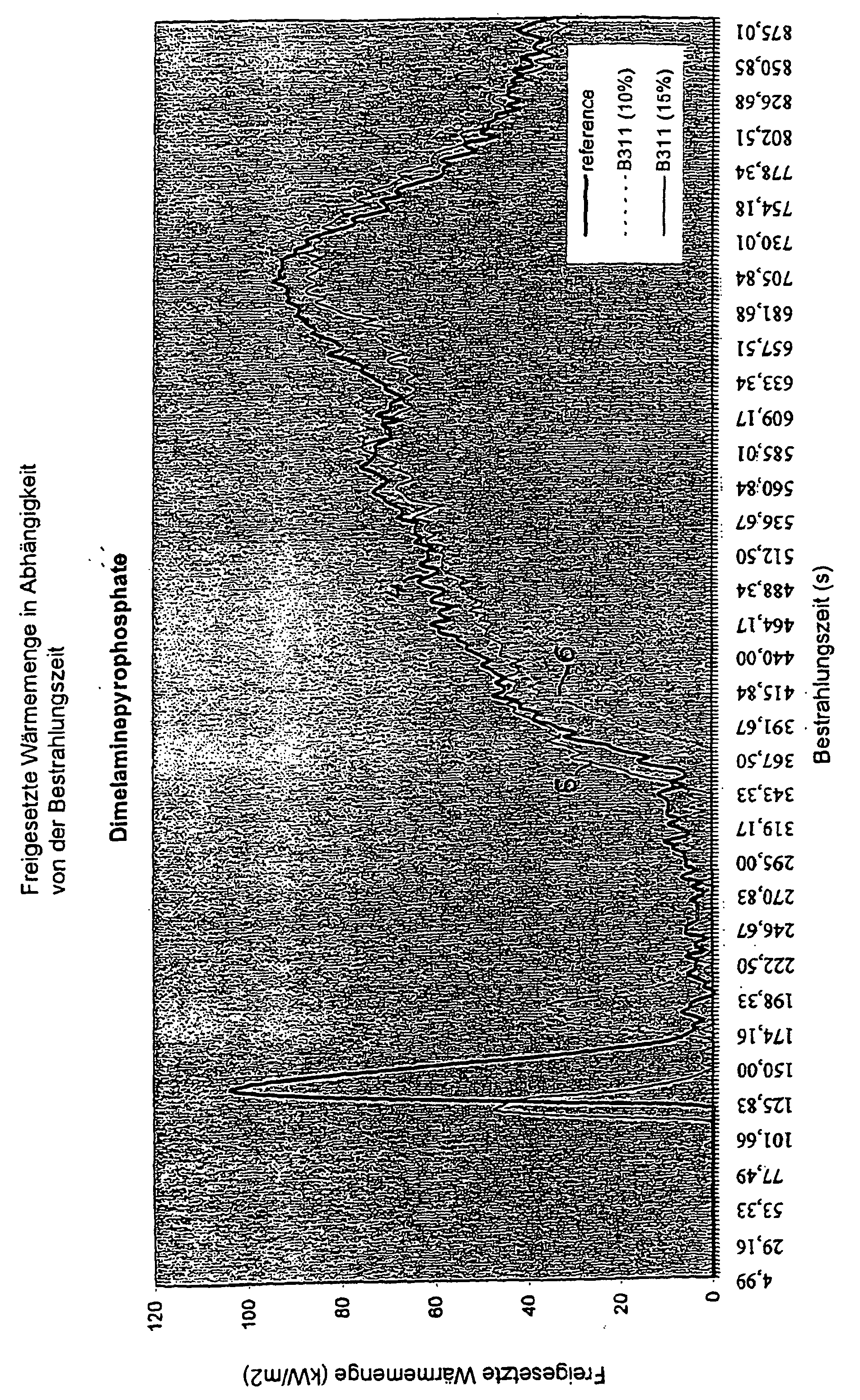

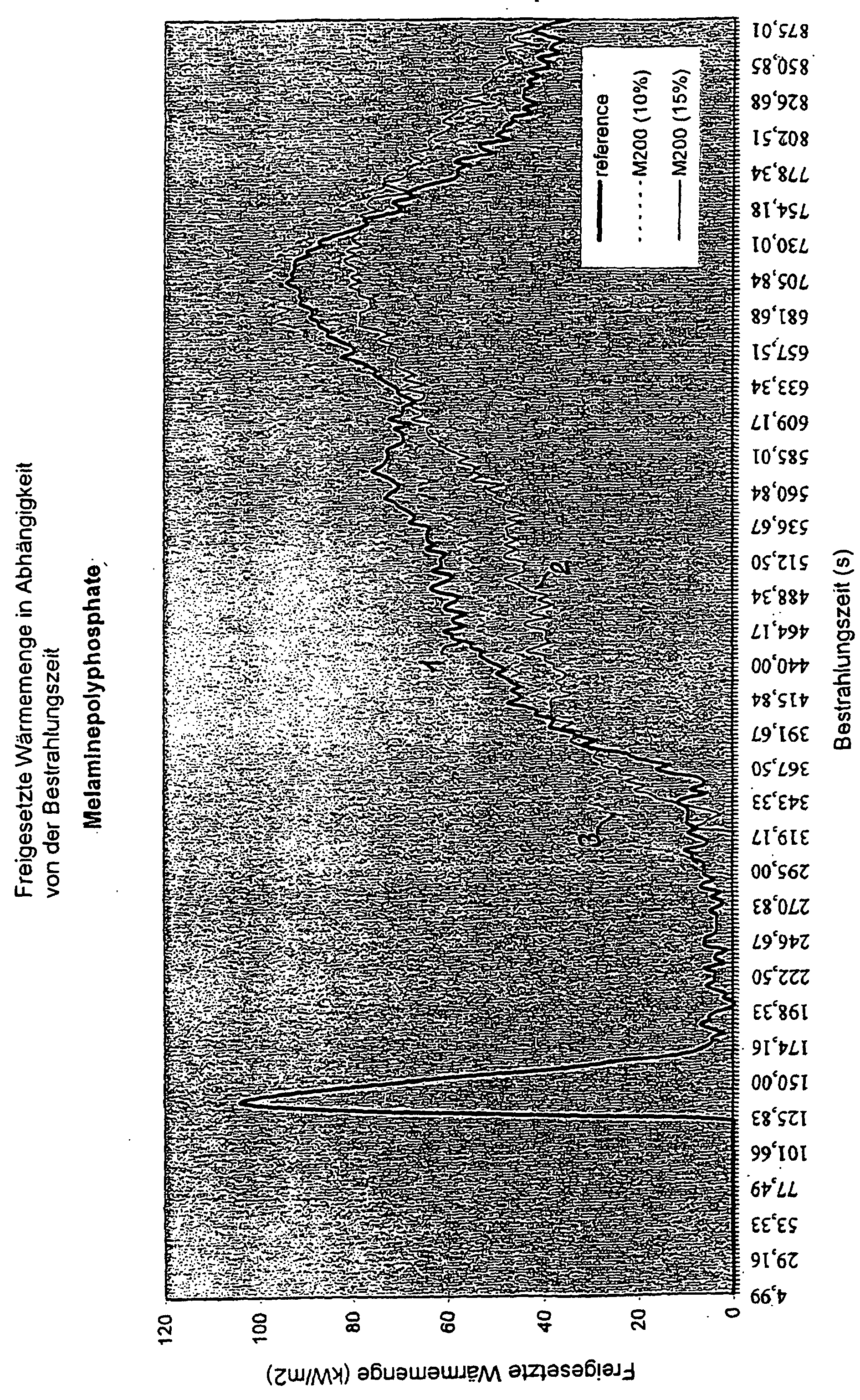

## Patentansprüche

1. Flammwidrige Harzbeschichtung aus einem flammhemmenden Grundharz und einer Topschicht aus einem Klarharz, **dadurch gekennzeichnet, dass** das Grundharz aus der Gruppe der Polyester-, Polyether-, Epoxy-, Polyurethan-, Acrylic-Acrylate, Melaminacrylate, Sillkon(meth)acrylate ausgewählt ist und Farbpigmente und 2,5 bis 50 Gew.-%, bezogen auf das Gewicht des Grundharzes flammhemmende Additive aus der Gruppe Melaminpolyphosphate. Melaminpyrophosphate, Ammoniumpolyphosphate oder Mischungen hiervon enthält und dass im Klarharz 0,5 bis 2 Gew.-%, bezogen auf das Gewicht des Klarharzes, von zumindest einem sterisch behinderten Amin, bei dem der Stickstoff in einem cycloaliphatischen Piperidylring eingebaut ist, vorhanden sind.

2. Flammwidrige Harzbeschichtung nach Anspruch 1, **dadurch gekennzeichnet, dass** das Grundharz aus Phosphor enthaltenden Polyurethanen besteht, die durch Copolymerisation eines Polymervorläufers mit Monomeren erhalten werden, wobei der polymerisierbare, Phosphor enthaltende Polymervorläufer
a) eine polymerisierbare ungesättigte Bindung;
b) eine Oxycarbonyl- oder Iminocarbonyl-Gruppe;
c) eine freie Hydroxy- oder eine funktionelle Gruppe, erhältlich durch die Reaktion einer freien Hydroxy-Gruppe mit einem geeigneten Elektrophil; und
d) eine endständige, Phosphor und Sauerstoff enthaltende Gruppe am Ende einer Kohlenstoffkette und zumindest eine Gruppe aufweist, ausgewählt aus einer Phosphor-Hydroxy-und gegebenenfalls einer substituierten Hydrocarbyl-Gruppe, die über eine Oxy-Gruppe mit einem Phosphoratom verbunden ist, und im wesentlichen frei von Halogene enthaltenden Gruppen ist und ein Molekulargewicht (Massenzahl Mn für ein Polymer) von 200 bis 5000 Daltons und gegebenenfalls eine Viskosität von kleiner 14 000 mPa · s hat.

3. Flammwidrige Harzbeschichtung nach Anspruch 1, **dadurch gekennzeichnet, dass** das Grundharz aus Phosphor enthaltenden Polyurethanen besteht, die durch Copolymerisation einer organischen Verbindung oder eines Polymers mit Monomeren erhalten werden, wobei die organische Verbindung oder das Polymer zumindest eine gegebenenfalls substituierte Cycloalkoxy-Gruppe enthält, in der zumindest eines der Ringatome Sauerstoff ist, wobei die Cycloalkoxy-Gruppe mit zumindest einer gegebenenfalls α-substituierten Alkylenylcarbonyloxy-Gruppe verbunden ist, die zumindest ein aktives Wasserstoffatom α-ständig zur Carbonyl-Gruppe aufweist, wobei
a) (zumindest) eine (der) Cycloalkoxy-Gruppe(n) mit einem Phosphatester reagiert, um eine endständige Phosphatester-Gruppe zu bilden, die eine Hydroxy-Gruppe an dem β-Kohlenstoffatom besitzt; und/oder
b) zumindest eine Alkylencarbonyl-Gruppe mit einem H-Phosphonatester reagiert, unter Ausbildung einer endständigen Phosphonatester-Gruppe β-ständig zu einer Carbonyloxy-Gruppe und gegebenenfalls (zumindest) eine (der) Cycloalkoxy-Gruppe(n) mit einer Carbonsäure-Gruppe reagiert, die mit einer ungesättigten Gruppe konjugiert ist unter Ausbildung einer Carbonyloxyhydroxyalkyl-Gruppe, diezu einerungesättigten Kohenstoffbindung benachbart ist und in einem oder in beiden Fällen das resultierende Produkt zumindest ein Phosphoratom, zumindest eine Hydroxyl-Gruppe und zumindest eine polymerisierbare, ungesättigte Kohlenstoffbindung enthält.

4. Flammwidrige Harzbeschichtung nach Anspruch 1, **dadurch gekennzeichnet, dass** im Klarharz 0,5 bis 5 Gew.-%, bezogen auf das Gewicht des Klarharzes, zumindest eines UV-Absorbers vorhanden sind.

5. Flammwidrige Harzbeschichtung nach Anspruch 1, **dadurch gekennzeichnet, dass** sie ein Melaminpolyphosphat gemäß der Formel (C₃H₈N₆)ₙ · (HPO₃)ₘ enthält, mit n, m gleich natürlichen Zahlen und einem Molarverhältnis Phosphor zu Melamin 1 : 0,5 bis 1 : 3, insbesondere 1 : 1 bis 1,5.

6. Flammwidrige Harzbeschichtung nach Anspruch 1, **dadurch gekennzeichnet, dass** sie ein Dimelaminpyrophosphat gemäß der Strukturformel 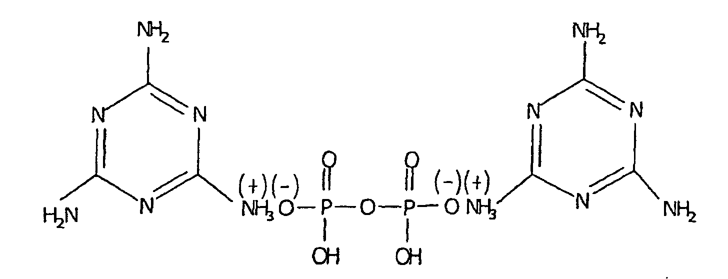 enthält.

7. FlammwidrigeHarzbeschichtung nach Anspruch 1, **dadurch gekennzeichnet, dass** sie ein Dimelaminorthophosphat gemäß der Strukturformel 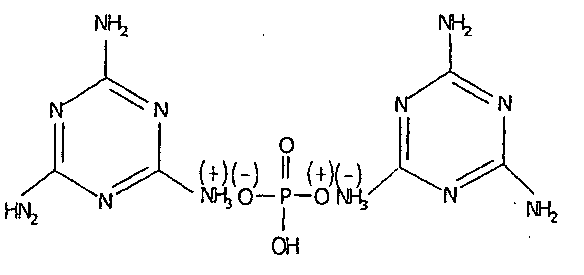 enthält.

8. Flammwidrige Harzbeschichtung nach Anspruch 1, **dadurch gekennzeichnet, dass** sie ein Monomelaminorthophosphat gemäß der Strukturformel 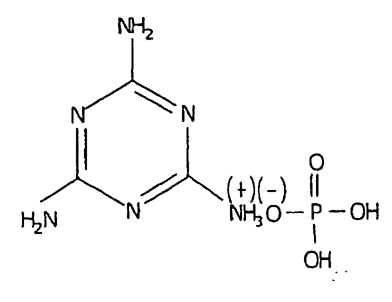 enthält.

9. Flammwidrige Harzbeschichtung nach Anspruch 1, **dadurch gekennzeichnet, dass** die Partikel des Ammoniumpolyphosphats in einem Harz mikrogekapselt sind, dessen Wasserlöslichkeit 0,06 bis 0,19 g/100 g Wasser bei einer Temperatur von 20 °C beträgt.

10. Flammwidrige Harzbeschichtung nach Anspruch I, **dadurch gekennzeichnet, dass** die flammhemmenden Additive einen Phosphorgehalt von 2,5 bis 50 Gew.-%, insbesondere von 12 bis 15 Gew.-%, bezogen auf das Gewicht des jeweiligen Additivs, aufweisen.

11. Flammwidrige Harzbeschichtung nach Anspruch 1, **dadurch gekennzeichnet, dass** die Basis der UV-Absorber Triazin, Benzyliden-Malonat, Hydroxyphenylbenzotriazole, 2-Hydroxybenzophenone oder Oxalanilid ist.

12. Flammwidrige Harzbeschichtung nach Anspruch 11, **dadurch gekennzeichnet, dass** der UV-Absorber auf Hydroxyphenyl-s-Triazinbasis mit einem Anteil von 0,5 bis 5 Gew.-%, insbesondere 1 bis 4 Gew.-%, bezogen auf das Gewicht des Klarharzes, in dem Klarharz enthalten ist.

13. Flammwidrige Harzbeschichtung nach Anspruch 1, **dadurch gekennzeichnet, dass** das Polyurethan(meth)acrylat herstellbar ist durch Umsetzung eines Polyurethans mit einer Verbindung, die mindestens eine phosphorhaltige Gruppe, mindestens eine (Meth)acrylat-Gruppe und mindestens eine funktionelle Gruppe enthält und die mit mindestens einer der Endgruppen des Polyurethans unter Ausbildung einer kovalenten Bindung reagiert.

14. Flammwidrige Harzbeschichtung nach Anspruch 13, **dadurch gekennzeichnet, dass** die phosphorhaltige Gruppe eine Phosphat- oder Phosphonatgruppe ist.

15. Flammwidrige Harzbeschichtung nach Anspruch 13, **dadurch gekennzeichnet, dass** die (Meth)acrylatgruppe Bestandteil einer (Meth)acryloyloxygruppe ist.

16. Flammwidrige Harzbeschichtung nach Anspruch 13, **dadurch gekennzeichnet, dass** die funktionelle Gruppe, die mit einer Endgruppe des Polyurethans unter Ausbildung einer kovalenten Bindung reagiert, eine Hydroxygruppe, bevorzugt eine primäre oder sekundäre Hydroxygruppe ist.

17. Flammwidrige Harzbeschichtung nach Anspruch 15, **dadurch gekennzeichnet, dass** 1 bis 3 (Meth)acryloyloxygruppen vorhanden sind.

18. Flammwidrige Harzbeschichtung nach Anspruch 1, **dadurch gekennzeichnet**, das ein oder mehrere flammhemmende Additive aus der Gruppe der Salze der phosphorigen Säure, einer Phosphonsäure, einer phosphonigen Säure, einer Phospinsäure, einer phosphinigen Säure mit Ammoniak und Melamin, dem Grundharz hinzugefügt sind.

19. Flammwidrige Harzbeschichtung nach Anspruch 1, **dadurch gekennzeichnet, dass** Poly- und Pyrosalze der phosphorigen Säure, einer Phosphonsäure, einer phosphonigen Säure mit Ammoniak und Melamin, als ein oder mehrere flammhemmende Additive dem Grundharz hinzugefügt sind.

20. Flammwidrige Harzbeschichtung nach einem der Ansprüche 1 bis 13, **dadurch gekennzeichnet, dass** der Grundlack neben zusätzlichen üblichen Additiven Farbpigmente enthält, die der Harzbeschichtung eine Anfangsfärbung verleihen, die sich durch Standard-Bewitterungstests in eine Färbung ändert, die einen maximalen Farbabstand dE=0,5 bis 2,0 von der Anfangsfärbung aufweist.

21. Verwendung der flammwidrigen Harzbeschichtung als Deckschicht von Platten für die Außenverkleidung von Gebäuden, für Wand- und Dachblenden, Balkonverkleidungen, Brüstungsplatten, für Nassräume und Laboratorien.

## Claims

1. A flame-retardant resin coating comprising a flame-retardant base resin and a top layer of a transparent resin, **characterised in that** the base resin is selected from the group of polyester, polyether, epoxy, polyurethane and acrylic acrylates, melamine acrylates and silicone(meth)acrylates and contains colour pigments and 2.5 to 50 wt.% relative to the weight of base resin of flame-retardant additives from the group comprising melamine polyphosphates, melamine pyrophosphates, ammonium polyphosphates or mixtures thereof and the transparent resin contains 0.5 to 2 wt.%, relative to the weight of the clear resin, of at least one sterically hindered amine, wherein the nitrogen is incorporated in a cycloaliphatic piperidyl ring.

2. A flame-retardant resin coating according to claim 1, **characterised in that** the base resin comprises phosphorus-containing polyurethanes obtained by copolymerisation of a polymer precursor with monomers, wherein the polymerisable phosphorus-containing polymer precursor comprises
a) a polymerisable unsaturated bond;
b) an oxycarbonyl or iminocarbonyl group;
c) a free hydroxy or a functional group obtainable by reacting a free hydroxy group with a suitable electrophil, and
d) a terminal phosphorus and oxygen-containing group at the end of a carbon chain, and comprises at least one group selected from a phosphorus-hydroxy and optionally a substituted hydrocarbyl group connected via an oxy group to a phosphorus atom and being substantially free from halogen-containing groups and having a molecular weight (mass number Mn for a polymer) of 200 to 5000 daltons and, if required, a viscosity of less than 14000 mPa.s.

3. A flame-retardant resin coating according to claim 1, **characterised in that** the base resin comprises phosphorus-containing polyurethanes obtained by copolymerisation of an organic compound or a polymer with monomers, wherein the organic compound or the polymer comprising at least one optionally substituted cycloalkoxy group in which at least one of the ring atoms is oxygen, wherein the cycloalkoxy group is connected to at least one optionally α-substituted alkylenyl carbonyloxy group which contains at least one active hydrogen atom in the α position relative to the carbonyl group,
wherein
a) (at least) one or one of the cycloalkoxy groups reacts with a phosphate ester in order to form a terminal phosphate ester group containing a hydroxy group on the β-carbon atom and/or
b) at least one alkylene carbonyl group reacts with an H-phosphonate ester to form a terminal phosphonate ester group in the β position relative to a carbonyloxy group and if required (at least) one or one of the cycloalkoxy groups reacts with a carboxylic acid group which is conjugated with an unsaturated group forming a carbonyloxy hydroxyl alkyl group near an unsaturated carbon bond, and in one or both cases the resulting product contains at least one phosphorus atom, at least one hydroxyl group and at least one polymerisable unsaturated carbon bond.

4. A flame-retardant resin coating according to claim 1, **characterised in that** the transparent resin contains 0.5 to 5 wt.%, relative to the weight of the transparent resin, of at least one UV adsorber.

5. A flame-retardant resin coating according to claim 1, **characterised in that** it contains a melamine polyphosphate according to the formula (C₃H₈N₆)ₙ. (HPO₃)ₘ with n and m equal to natural numbers and a molar ratio of phosphorous to melamine of 1:0.5 to 1:3, particularly 1:1 to 1.5.

6. A flame-retardant resin coating according to claim 1, **characterised in that** it contains a dimelamine pyrophosphate having the structural formula

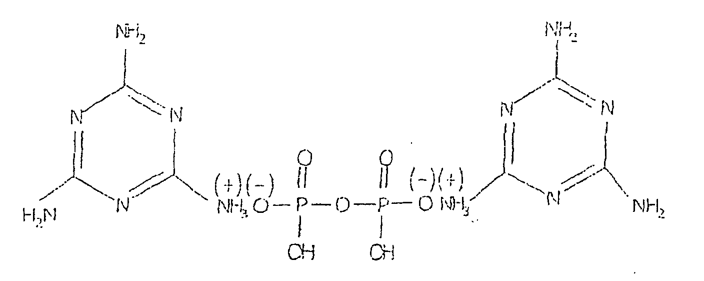

7. A flame-retardant resin coating according to claim 1, **characterised in that** it contains a dimelamine orthophosphate having the structural formula

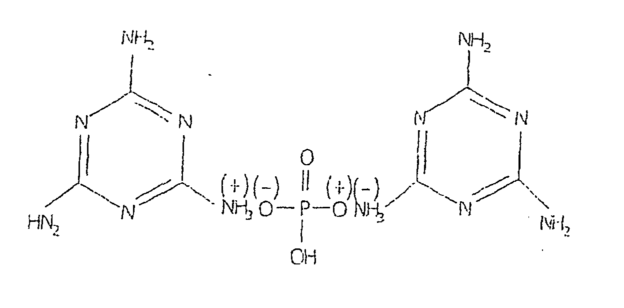

8. A flame-retardant resin according to claim 1, **characterised in that** it contains a monomelamine orthophosphate having the structural formula

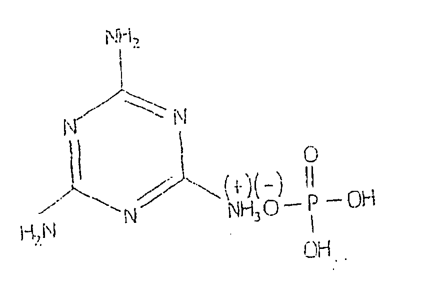

9. A flame-retardant resin coating according to claim 1, **characterised in that** the particles of ammoniumpolyphosphate are microencapsulated in a resin having a water solubility of 0.06 to 0.19 g/100 g water at a temperature of 20°C.

10. A flame-retardant resin coating according to claim 1, **characterised in that** the flame-retardant additives have a phosphorus content of 2.5 to 50 wt.%, particularly 12 to 15 wt.%, relative to the weight or the respective additive.

11. A flame-retardant resin coating according to claim 1, **characterised in that** the base of the UV absorber is triazine, benzylidene malonate, hydroxyphenyl benzotriazoles, 2-hydroxybenzophenones or oxalanilide.

12. A flame-retardant resin coating according to claim 11, **characterised in that** the UV absorber is based on hydroxyphenyl-s-triazine and is contained in the transparent resin in a proportion of 0.5 to 5 wt.%, particularly 1 to 4 wt.%, relative to the weight of the transparent resin.

13. A flame-retardant resin coating according to claim 1, **characterised in that** the polyurethane (meth)acrylate is produced by reacting a polyurethane with a compound containing at least one phosphorus-containing group, at least one (meth)acrylate group and at least one functional group, and reacting with at least one of the end groups of the polyurethane to form a covalent bond.

14. A flame-retardant resin coating according to claim 13, **characterised in that** the phosphorus-containing group is a phosphate or phosphonate group.

15. A flame-retardant resin coating according to claim 13, **characterised in that** the (meth)acrylate group is a component of a (meth)acryloyloxy group.

16. A flame-retardant resin coating according to claim 13, **characterised in that** the functional group which reacts with an end group of the polyurethane to form a covalent bond is a hydroxy group, preferably a primary or secondary hydroxy group.

17. A flame-retardant resin coating according to claim 15, **characterised in that** 1 to 3 (meth)acryloyloxy groups are present.

18. A flame-retardant resin coating according to claim 1, **characterised in that** one or more flame-retardant additives from the group of the salts of phosphorous acid, a phosphonic acid, a phosphonous acid, a phosphinic acid and a phosphenous acid with ammonia and melamine are added to the base resin.

19. A flame-retardant resin coating according to claim 1, **characterised in that** one or more flame-retardant additives in the form of poly- and pyro-salts of phosphorous acid, a phosphonic acid and a phosphonous acid with ammonia and melamine are added to the base resin.

20. A flame-retardant resin coating according to any of claims 1 to 13, **characterised in that** the base varnish contains besides additional conventional additives colour pigments which provide an initial colour to the resin coating which is changed by standard weathering tests to a colour having a maximum colour difference dE of 0.5 to 2.0 from the initial colour.

21. Use of the flame-retardant resin coating as a cover layer on panels for external cladding of buildings, wall and ceiling coverings, balcony cladding, parapet slabs, wet rooms and laboratories.

## Revendications

1. Revêtement de résine ignifuge constitué d'une résine de base retardatrice de flamme et d'une couche supérieure en résine transparente, **caractérisé en ce que** la résine de base est choisie dans le groupe constitué des acrylates de polyester, de polyéther, d'époxy, de polyuréthane, acryliques, des acrylates de mélamine, des (méth)acrylates de silicone et contient des pigments colorés et de 2,5 à 50% en poids, ramené au poids de la résine de base, d'additifs retardateurs de flamme du groupe des polyphosphates de mélamine, des pyrophosphates de mélamine, des polyphosphates d'ammonium ou des mélanges de ceux-ci, et **en ce qu'**il y a dans la résine transparente de 0,5 à 2% en poids, ramené au poids de la résine transparente, d'au moins une amine à encombrement stérique dans laquelle l'azote est incorporé dans un noyau pipéridyle cycloaliphatique.

2. Revêtement de résine ignifuge selon la revendication 1, **caractérisé en ce que** la résine de base se compose de polyuréthanes contenant du phosphore qui sont obtenus par copolymérisation d'un précurseur de polymère avec des monomères, dans lequel le précurseur de polymère polymérisable contenant du phosphore présente
a) une liaison insaturée polymérisable ;
b) un groupe oxycarbonyle ou iminocarbonyle ;
c) un groupe hydroxy libre ou un groupe fonctionnel pouvant être obtenu par la réaction d'un groupe hydroxy libre avec un composé électrophile approprié ; et
d) un groupe terminal contenant du phosphore et de l'oxygène à l'extrémité d'une chaîne carbonée et au moins un groupe choisi parmi un groupe phospho-hydroxy et le cas échéant un groupe hydrocarbyle substitué qui est relié à un atome de phosphore par l'intermédiaire d'un groupe oxy, et
est pratiquement dépourvu de groupes contenant des halogènes et possède une masse moléculaire (en nombre Mn pour un polymère) de 200 à 5 000 daltons et le cas échéant une viscosité inférieure à 14 000 mPa ·s.

3. Revêtement de résine ignifuge selon la revendication 1, **caractérisé en ce que** la résine de base se compose de polyuréthanes contenant du phosphore qui sont obtenus par copolymérisation d'un composé organique ou d'un polymère avec des monomères, dans lequel le composé organique ou le polymère contient au moins un groupe cycloalcoxy le cas échéant substitué dont l'un au moins des atomes du noyau cyclique est l'oxygène, le groupe cycloalcoxy étant relié à au moins un groupe alkylénylcarbonyloxy le cas échéant α-substitué qui présente au moins un atome d'hydrogène actif en position α par rapport au groupe carbonyle, dans lequel
a) (au moins) un (des) groupe(s) cycloalcoxy réagit avec un ester phosphate afin de former un groupe ester phosphate terminal possédant un groupe hydroxy sur l'atome de carbone β ; et/ou
b) au moins un groupe alkylènecarbonyle réagit avec un ester H-phosphonate en formant un groupe ester phosphonate terminal en position β par rapport à un groupe carbonyloxy et le cas échéant (au moins) un (des) groupe(s) cycloalcoxy réagit avec un groupe acide carboxylique qui est conjugué à un groupe insaturé en formant un groupe carbonyloxyhydroxyalkyle qui est voisin d'une liaison carbone insaturée et, dans un cas ou dans les deux cas, le produit résultant contient au moins un atome de phosphore, au moins un groupe hydroxyle et au moins une liaison carbone insaturée polymérisable.

4. Revêtement de résine ignifuge selon la revendication 1, **caractérisé en ce qu'**il y a dans la résine transparente de 0,5 à 5% en poids, ramené au poids de la résine transparente, d'au moins un absorbeur d'UV.

5. Revêtement de résine ignifuge selon la revendication 1, **caractérisé en ce qu'**il contient un polyphosphate de mélamine de la formule (C₃H₈N₆)ₙ · (HPO₃)ₘ, où n et m sont des nombres naturels et un rapport molaire du phosphore sur la mélamine est de 1:0,5 à 1:3, en particulier de 1:1 à 1,5.

6. Revêtement de résine ignifuge selon la revendication 1, **caractérisé en ce qu'**il contient un pyrophosphate de dimélamine ayant la formule de structure :

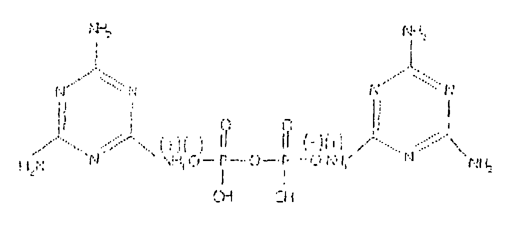

7. Revêtement de résine ignifuge selon la revendication 1, **caractérisé en ce qu'**il contient un orthophosphate de dimélamine ayant la formule de structure :

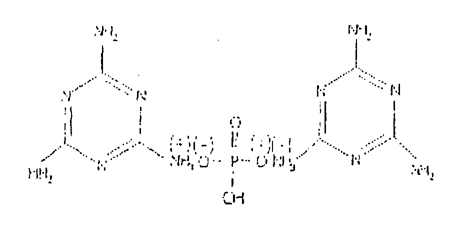

8. Revêtement de résine ignifuge selon la revendication 1, **caractérisé en ce qu'**il contient un orthophosphate de monomélamine ayant la formule de structure :

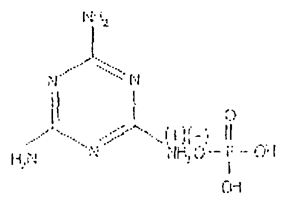

9. Revêtement de résine ignifuge selon la revendication 1, **caractérisé en ce que** les particules du polyphosphate d'ammonium sont micro-encapsulées dans une résine dont la solubilité dans l'eau est de 0,06 à 0,19 g/100 g d'eau à une température de 20°C.

10. Revêtement de résine ignifuge selon la revendication 1, **caractérisé en ce que** les additifs retardateurs de flamme présentent une teneur en phosphore de 2,5 à 50% en poids, en particulier de 12 à 15% en poids, ramenée au poids de chaque additif.

11. Revêtement de résine ignifuge selon la revendication 1, **caractérisé en ce que** les absorbeurs d'UV sont à base de triazine, de malonate de benzylidène, d'hydroxyphénylbenzotriazole, de 2-hydroxybenzophénone ou d'oxalanilide.

12. Revêtement de résine ignifuge selon la revendication 11, **caractérisé en ce que** l'absorbeur d'UV à base d'hydroxyphényl-s-triazine est contenu dans la résine transparente en une quantité de 0,5 à 5% en poids, en particulier de 1 à 4% en poids, ramenée au poids de la résine transparente.

13. Revêtement de résine ignifuge selon la revendication 1, **caractérisé en ce que** le (méth)acrylate de polyuréthane peut être préparé en faisant réagir un polyuréthane avec un composé qui contient au moins un groupe contenant du phosphore, au moins un groupe (méth)acrylate et au moins un groupe fonctionnel et qui réagit avec l'un au moins des groupes terminaux du polyuréthane en formant une liaison covalente.

14. Revêtement de résine ignifuge selon la revendication 13, **caractérisé en ce que** le groupe contenant du phosphore est un groupe phosphate ou phosphonate.

15. Revêtement de résine ignifuge selon la revendication 13, **caractérisé en ce que** le groupe (méth)acrylate fait partie d'un groupe (méth)acryloyloxy.

16. Revêtement de résine ignifuge selon la revendication 13, **caractérisé en ce que** le groupe fonctionnel qui réagit avec un groupe terminal du polyuréthane en formant une liaison covalente est un groupe hydroxy, de préférence un groupe hydroxy primaire ou secondaire.

17. Revêtement de résine ignifuge selon la revendication 15, **caractérisé en ce que** 1 à 3 groupes (méth)acryloyloxy sont présents.

18. Revêtement de résine ignifuge selon la revendication I, **caractérisé en ce qu'**un ou plusieurs additifs retardateurs de flamme du groupe des sels d'ammoniac et de mélamine de l'acide phosphoreux, d'un acide phosphonique, d'un acide phosphoneux, d'un acide phosphinique, d'un acide phosphincux sont ajoutés à la résine de base.

19. Revêtement de résine ignifuge selon la revendication I, **caractérisé en ce que** des poly- et pyrosels de l'acide phosphoreux, d'un acide phosphonique, d'un acide phosphoneux. d'un acide phosphinique, d'un acide phosphineux d'ammoniaque et de mélanine sont ajoutés à la résine de base en tant que un ou plusieurs additifs retardateurs de flamme.

20. Revêtement de résine ignifuge selon l'une des revendications 1 à 13, **caractérisé en ce que** la résine de base contient, outre des additifs usuels supplémentaires, des pigments colorés qui confèrent au revêtement de résine une teinte de départ qui, par des tests standard de résistance aux intempéries, se modifie en une teinte qui présente un écart de teinte maximal dE = 0,5 à 2,0 par rapport a la teinte de départ.

21. Utilisation du revêtement de résine ignifuge en tant que couche de recouvrement de plaques d'habillage extérieur de bâtiments, pour des panneaux de murs et de toitures, des habillages de balcons, des plaques d'allège, pour des locaux humides et des laboratoires.
